# EUROPÄISCHE PATENTANMELDUNG

(11) **EP 1 148 665 A2**
(43) Veröffentlichungstag der Anmeldung: **24.10.2001**
(21) Anmeldenummer: 01109686.4
(22) Anmeldetag: 19.04.2001
(51) Int. Cl.: H04B 10/08

(54) **Verfahren zur Überwachung des Betriebes von optischen Zuleitungsfasern**

(30) Priorität: 20.04.2000 DE 10019814
(71) Anmelder: SIEMENS AKTIENGESELLSCHAFT, 80333 München (DE)
(72) Erfinder: Jäger, Hubert, Dr., McLean, VA 22101 (US); Stoll, Detlef, Dr., Boca Raton, FI 33496 (US); Stortz, Gerhard, 85586 Poing (DE)

(57) **Zusammenfassung**

Über zumindest zwei für die Übertragung von optischen Signalen (osl,os2) zwischen einer zentralen und einer dezentralen, optischen Einrichtung (ZE1,DZ1) vorgesehenen, optischen Zuleitungsfasern (ZF1,ZF2) wird ein in der zentralen Einrichtung (ZE1) erzeugtes optisches Hilfssignal (oh) zusätzlich zu einem Nutzsignal (os1) von der zentralen zur dezentralen optischen Einrichtung (ZE1,DZ1) übertragen. Das in der dezentralen, optischen Einrichtung (DZ1) empfangene, optische Hilfssignal (oh) wird umgelenkt, über eine zweite optische Zuleitungsfaser (ZF1) zur zentralen, optischen Einrichtung (ZE1) übertragen und in der zentralen, optischen Einrichtung (ZE1) der Empfang oder das Fehlen des optischen Hilfssignals (oh) sowie des optischen Nutzsignals (os2) zur Überwachung des Betriebszustands der optischen Zuleitungsfasern (ZF1,ZF2) ausgewertet.

## Beschreibung

Die Erfindung betrifft ein Verfahren zur Überwachung des Betriebes von optischen Zuleitungsfasern innerhalb eines transparenten faseroptischen Kommunikationsnetzes, insbesondere nach Patent DE 199 10 646.0, wobei für die Übertragung von optischen Nutzsignalen zwischen einer zentralen und einer dezentralen, optischen Einrichtung zumindest zwei optische Zuleitungsfasern vorgesehen sind.

Bei derzeitigen faseroptischen Kommunikationsnetzen, insbesondere bei Ring- oder Doppelsterntechnologie aufweisenden Kommunikationsnetzen, werden die Kommunikationseinrichtungen eines Netzkunden beispielsweise eines Internetproviders mit Hilfe von mehreren optischen Zuleitungsfasern an das faseroptische Kommunikationsnetz angeschlossen. Über derartige optische Zuleitungsfasern werden üblicherweise Datenmengen im Gigabitbereich übertragen, wobei die Datenübertragung zwischen einer zentralen Einrichtung, d.h. beispielsweise eines Netzknotens des faseroptischen Kommunikationsnetzes, und einer dezentralen optischen Einrichtung beispielsweise einem Netzabschlußgerät erfolgt. Bei derartig hohen Datenübertragungsraten wird durch den Netzkunden eine hohe Zuverlässigkeit des volloptischen Kommunikationsnetzes bzw. des Anschlusses. an das faseroptische Kommunikationsnetz vom Netzbetreiber gefordert.

Um eine einwandfreie Funktion des Anschlusses der Kommunikationseinrichtungen an das faseroptische Kommunikationsnetz sicherstellen zu können, muß dieser fernüberwacht werden. Dies bedeutet, daß im jeweiligen Netzknoten Informationen über den Betriebszustand der optischen Zuleitungsfasern für den jeweiligen Netzanschluß zur Verfügung stehen müssen. Tritt beispielsweise eine Funktionsstörung für den Anschluß eines Netzkunden auf, so ist es dem Netzbetreiber ohne Fernüberwachung des Anschlusses des Netzkunden nicht möglich zu beurteilen, ob die Funktionsstörung in seinem eigenen Zuständigkeitsbereich liegt, etwa weil ein Bagger eine der optischen Zuleitungsfasern beschädigt hat, oder ob der Fehler im Zuständigkeitsbereich des Netzkunden liegt, weil beispielsweise dessen Sendelaser einen Defekt aufweist.

Daher ist es von Vorteil automatisch fernüberwachen zu können, ob Störungen bzw. Unterbrechungen auf optischen Zuleitungsfasern im Verantwortungsbereich des Netzbetreibers liegen oder nicht.

Des Weiteren sind beim im Aufbau bzw. Ausbau befindlichen faseroptischen Kommunikationsnetzen, insbesondere bei Metropol-Ring-Kommunikationsnetzen, die für die Verbindung der benachbarten Netzknoten untereinander zur Verfügung stehenden optischen Fasern bzw. Fasernpaare zwischen zwei benachbarten Netzknoten häufig nicht vollständig belegt, d.h. eine Mehrfachnutzung der einzelnen optischen Fasern unter Einsatz der Wellenlängenmultiplextechnik (Wavelenth Division Multiplexing = WDM) ist in einem derartigen Ausbaustadium bzw. in einer derart geringen Nutzung der vorhandenen Faserkapazitäten des faseroptischen Kommunikationsnetzes noch nicht erforderlich.

Bei herkömmlichen, bekannten Netzarchitekturen besteht die Möglichkeit exklusiv für einen Netzkunden eine unbenutzte, mehrere Netzknoten miteinander verbindende, optische Faser ausschließlich vorzusehen, über diese der Netzkunde Daten aus dem faseroptischen Kommunikationsnetz beziehen oder zum faseroptischen Kommunikationsnetz übertragen kann. Derartige unmittelbar für einen Netzkunden reservierte optische Fasern sind in der Fachwelt unter der Bezeichnung "Dark Fibers" ("dunkle Fasern") bekannt, wobei durch die Bezeichnung "Dark Fibers" die Tatsache umschrieben wird, daß das in der optischen Faser im faseroptischen Kommunikationsnetz übertragene, optische Signal ausschließlich durch die Lasereinheit des Netzkunden erzeugt wird und keinesfalls das im Netzknoten empfangene optische Signal durch den Netzbetreiber gewandelt und erneut beispielsweise mit einer anderen Wellenlänge ausgesandt wird.

Jedoch ist bei derartigen Netzarchitekturen die Möglichkeit der Bereitstellung einer "Dark Fibers" nur als zusätzliche Möglichkeit zu der primären Datenübertragung mit Hilfe der WDM-Technik vorgesehen, d.h. üblicherweise werden optische Zuleitungsfasern eines Netzkunden an einem Netzknoten befindlichen WDM-Multiplexer, mit dessen Hilfe die über mehrere Zuleitungsfasern im Netzknoten empfangenen optischen Signale auf eine gemeinsame die einzelnen Netzknoten verbindende optische Faser gemultiplext werden, geführt - siehe hierzu insbesondere "A Cost-Effective Approach to Introduce an Optical WDM Network in the Metropolitan Enviroment", S. Johannson, et al., IEEE Journal on Selected Areas in Communications, Vol. 16, No. 7, September 1998, Seite 1109 bis Seite 1121. Allerdings ist bei einem Anschluß eines Netzkunden über derartige "Dark Fibers" keine Überwachung der Übertragungsqualität sowie die beispielsweise über eine Gebührenerhebung seitens des Netzbetreibers benötigte Erfassung der übertragenen Datenmengen möglich. Auch für das Auftreten einer Funktionsstörung der "Dark Fibers" wurden bei bekannten Kommunikationsnetzen keine Schutzmaßnahmen beispielsweise eine Alarmierung des jeweiligen optischen Netzknotens vorgesehen, durch die eine schnelle und zuverlässige Fehlerlokalisation ermöglicht würde. Desweiteren sind bisher auch keine Schutzschaltungen für "Dark Fibers" bekannt, durch die beim Auftreten eines Faserbruches der aktiven optischen "Dark Fiber" auf die redundante optische "Dark Fiber" umgeschaltet werden könnte. Aufgrund dieser fehlenden Servicemöglichkeiten wird seitens des Netzbetreibers nur äußerst wenigen Netzkunden der Netzanschluß über eine "Dark Fiber" ermöglicht.

Die der Erfindung zugrundeliegende Aufgabe besteht darin, den Anschluß von Netzkunden an die die Netzknoten des transparenten faseroptischen Kommunikationsnetzes verbindenden transparenten optischen Fasern hinsichtlich der Überwachung der optischen Zuleitungsfasern und der Zuverlässigkeit der über die optischen Zuleitungsfasern geschalteten Verbindung zu verbessern und somit einen stufenweisen Ausbau des faseroptischen Kommunikationsnetzes zunächst ohne Einsatz der WDM-Technik zu ermöglichen. Die Aufgabe wird ausgehend von einem Verfahren gemäß den Merkmalen des Oberbegriff des Patentanspruches 1 durch die Merkmale des kennzeichnenden Teils gelöst.

Der wesentliche Aspekt des erfindungsgemäßen Verfahrens ist darin zu sehen, daß ein in der zentralen Einrichtung erzeugtes optisches Hilfssignal zusammen mit einem ersten optischen Nutzsignal über mindestens eine der optischen Zuleitungsfasern von der zentralen zur dezentralen optischen Einrichtung übertragen wird und das in der dezentralen, optischen Einrichtung empfangene, optische Hilfssignal umgelenkt und über mindestens eine weitere der optischen Zuleitungsfasern zur zentralen, optischen Einrichtung zusätzlich zu einem zweiten optischen Nutzsignal rückübertragen wird. Erfindungsgemäß wird der Empfang des rückübertragenen optischen Hilfssignals in der zentralen, optischen Einrichtung zur Überwachung des Betriebszustandes von zumindest einer der beiden optischen Zuleitungsfasern optisch ausgewertet. Vorteilhaft wird hier ein zusätzliches optisches Hilfsignal in einem im Netzknoten angeordneten Netzsteuergerät bzw. einer Überwachungseinrichtung erzeugt und über die komplette Zuleitungsfaser zum Netzabschlußgerät zusätzlich zu einem ersten Nutzsignal übertragen, wobei das Hilfssignal keinen hohen Qualitätsanforderungen genügen muß und somit eine kostengünstige Laserdiode bzw. gegebenenfalls eine Leuchtdiode zu seiner Erzeugung verwendet werden kann. Die Ein- und Auskopplung des Hilfssignals in der zentralen bzw. dezentralen optischen Einrichtung erfolgt besonders vorteilhaft mit optischen Kopplern, so daß eine zusätzliche Wandlung des optischen Hilfssignals in ein elektrisches Signal entfällt. Auch die Umlenkung des optischen Hilfssignals in der dezentralen Einrichtung kann durch eine einfache zusätzliche optische Umlenkfaser realisiert werden und erfordert somit keinen hohen technischen Aufwand. In anderen Worten das beim Netzkunden installierte Netzabschlußgerät weist einen einfachen, passiven Aufbau auf und ist daher äußerst zuverlässig. Durch den passiven Aufbau wird lokal beim Netzkunden für das passive Netzabschlußgerät keine externe Speisestromversorung benötigt, woraus sich eine zusätzliche Flexibilisierung hinsichtlich der Standortwahl für den Betrieb des passiven Netzabschlußgerätes ergibt. Somit kann auf vorteilhafte Weise durch den Empfang des optischen Hilfsignals nach der Umlenkung in dem passiven Netzabschlußgerät ein ordnungsgemäßer Betriebszustand der optischen Zuleitungsfasern festgestellt werden.

Nach einer weiteren Ausgestaltung des erfindungsmäßen Verfahrens wird zusätzlich zu dem optischen Hilfssignal das zweite optische Nutzsignal zur Überwachung des Betriebszustands der beiden optischen Fasern in der zentralen, optischen Einrichtung ausgewertet - Anspruch 2 - und zumindest ein Teil des in der dezentralen, optischen Einrichtung empfangenen Hilfssignals abgeteilt sowie die im abgeteilten Hilfssignal enthaltene Faserzustandsinformation über den Betriebszustand der zumindest einen optischen Zuleitungsfaser in der dezentralen, optischen Einrichtung angezeigt - Anspruch 3. Zusätzlich liegt die Frequenz des optischen Hilfssignals im optisch sichtbaren Frequenzbereich und weist bei der Erzeugung im Netzknoten eine Lichtleistungsintensität kleiner zwei Milliwatt auf - Anspruch 4 und 5. Dies ist mit den Vorteilen verbunden, daß ein Teil des Hilfssignals im passiven Netzabschlußgerät abgeteilt werden kann und unmittelbar dem Netzkunden am passiven Netzabschlußgerät ohne Gefährdung des Augenlichts des Wartungspersonals angezeigt werden kann, d.h. der Netzkunde erhält auf besonders einfache, aber effiziente Weise Informationen über den Betriebszustand der Zuleitungsfaser vom Netzknoten zum passiven Netzabschlußgerät und kann somit eine auftretende Funktionsstörung der Zuleitungsfaser dem Netzbetreiber beispielsweise telefonisch mitteilen.

Weitere vorteilhafte Ausgestaltungen des erfindungsgemäßen Verfahrens sind den weiteren Ansprüchen zu entnehmen.

Im folgenden wird das erfindungsgemäße Verfahren anhand von vier Prinzipschaltbildern näher erläutert.
- Figur 1: zeigt in einem Prinzipschaltbild ein transparentes faseroptisches Kommunikationsnetz,
- Figur 2: zeigt beispielhaft in einem weiteren Prinzipschaltbild den Anschluß zweier Kommunikationseinrichtungen eines Netzkunden an einen optischen Netzknoten des transparenten faseroptischen Kommunikationsnetzes,
- Figur 3: zeigt in einem weiteren Prinzipschaltbild ein optisches Zuleitungsfasernpaar zwischen einem optischen Netzknoten und dem erfindungsgemäßen Netzabschlußgerät eines transparenten faseroptischen Kommunikationsnetzes und
- Figur 4: zeigt in einem weiteren Prinzipschaltbild ein optisches Zuleitungsfasernpaar mit 1+1 Leitungsschutz zwischen einem optischen Netzknoten und dem erfindungsgemäßen Netzabschlußgerät eines transparenten faseroptischen Kommunikationsnetzes.

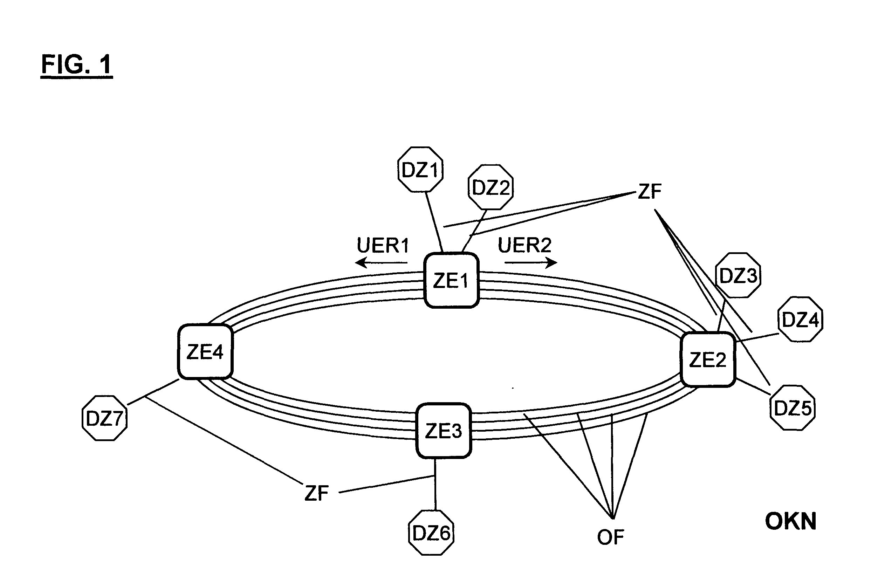

In Figur 1 ist ein transparentes faseroptisches Kommunikationsnetz OKN, beispielweise ein eine Ringnetz-Topologie aufweisendes Kommunikationsnetz OKN schematisch dargestellt, wobei beispielhaft für eine Vielzahl von möglichen zentralen optischen Einrichtungen bzw. optischen Netzknoten ZE ein erster, zweiter, dritter und vierter optischer Netzknoten ZE1-ZE4 dargestellt sind. Die einzelnen optischen Netzknoten sind jeweils mit den jeweiligen Nachbarknoten über optische Fasern OF miteinander verbunden, d.h. der erste ZE1 ist mit dem zweiten ZE2, der zweite ZE2 mit dem dritten ZE3, der dritte ZE3 mit dem vierten ZE4 und der vierte ZE4 mit dem ersten ZE1 optischen Netzknoten jeweils über optische Fasern OF verbunden und resultieren somit in einem eine Ringnetz-Topologie aufweisenden transparenten, faseroptischen Kommunikationsnetz OKN. Beispielshaft sind in Figur 1 vier einer Vielzahl von optischen Fasern OF dargestellt. Desweiteren werden die optischen Fasern OF in einem unidirektionalen Betriebsmodus betrieben, wobei eine Übertragung von optischen Signalen os über die optischen Fasern OF sowohl in einer ersten Übertragungsrichtung UE1 als auch in einer entgegengesetzt zur ersten, zweiten Übertragungsrichtung UE2 möglich ist, d.h. jeder optischen Faser OF wird eine erste oder zweite Übertragungsrichtung UER1/2 anwendungsorientiert zugeordnet.

Zusätzlich sind in Figur 1 beispielhaft für eine Vielzahl von möglichen dezentralen optischen Einrichtungen bzw. den optischen passiven Netzabschlußgeräten eines Netzkunden DZ eine erste, zweite, dritte, vierte, fünfte, sechste und siebte dezentrale optische Einrichtung DZ1-DZ7 dargestellt, wobei an den ersten optischen Netzknoten ZE1 die erste und zweite dezentrale Einrichtung DZ1, DZ2, an den zweiten optischen Netzknoten ZE2 die dritte, vierte und fünfte dezentrale optische Einrichtung DZ3, DZ4, DZ5, an den dritten optischen Netzknoten ZE3 die sechste dezentrale optische Einrichtung DZ6 und an den vierten optischen Netzknoten ZE4 die siebte dezentrale optische Einrichtung DZ7 jeweils durch optische Zuleitungsfasern ZF angeschlossen sind.

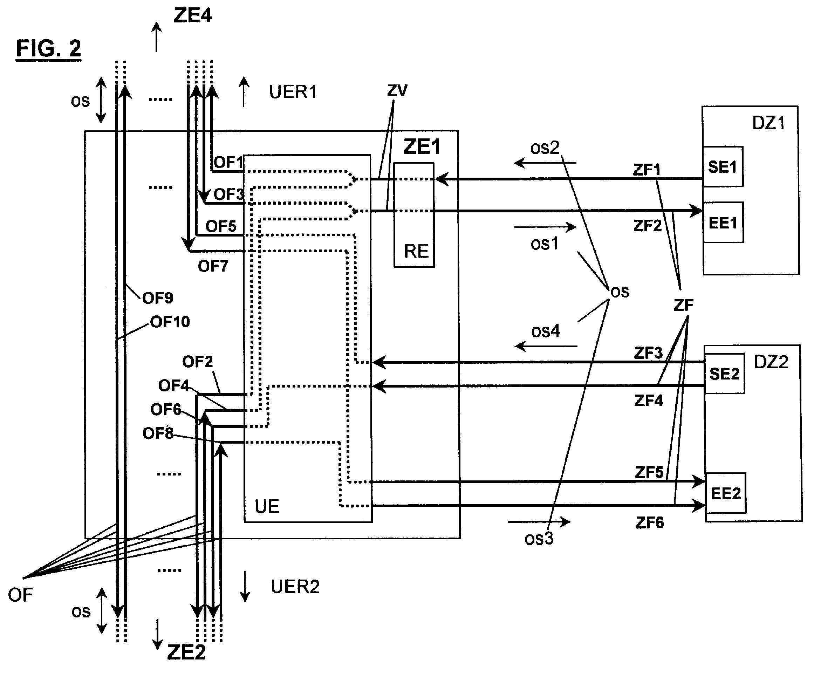

In Figur 2 ist der erste optische Netzknoten ZE1 und die an diesen über optische Zuleitungsfasern ZF angeschlossene erste und zweite dezentrale optische Einrichtung DZ1, DZ2 dargestellt, wobei in der ersten optischen dezentralen Einrichtung DZ1 eine erste optische Empfangseinheit EE1 zum Empfang von optischen Signalen os und eine erste optische Sendeeinrichtung SE1 zum Senden von optischen Signalen os vorgesehen ist. Analog dazu sind in der zweiten dezentralen optischen Einrichtung DZ2 eine zweite optische Empfangseinheit EE2 zum Empfang von optischen Signalen os und eine zweite optische Sendeeinrichtung SE2 zum Senden von optischen Signalen os vorgesehen.

Der erste optische Netzknoten ZE1 weist erfindungsgemäß eine Überwachungseinheit UE zur Überwachung des Betriebszustands der optischen Zuleitungsfasern ZF1-ZF6 und/oder der an die optische Überwachungseinrichtung UE geführten optischen Fasern OF und zur Überwachung der Datenrate der zwischen der ersten'und zweiten dezentralen und der ersten zentralen optischen Einrichtung DZ1, DZ2, ZE1 aktuell übertragenen Daten auf. Desweiteren ist im ersten optischen Netzknoten ZE1 eine Regenerationseinheit RE zur Wiederherstellung des ursprünglichen Sendepegels der über die optischen Verbindungsfasern ZV und/oder über die optischen Fasern OF übertragenen optischen Signale os vorgesehen, wobei in Figur 2 beispielsweise die Regenerationseinheit RE über optische Zuleitungsfasern ZF an die Überwachungseinrichtung UE angeschlossen ist und die erste optische Zuleitungsfaser ZF1 und die zweite optische Zuleitungsfaser ZF2 an die Regenerationseinrichtung RE geführt sind. Desweiteren kann zusätzlich mit Hilfe der Regenerationseinrichtung RE beispielsweise eine Regeneration der übertragenen Signalimpulse ("pulse shaping") und/oder eine Rückgewinnung des Signaltaktes ("retiming") durchgeführt werden.

Bei einer weiteren, nicht in Figur 2 dargestellten Ausgestaltung des transparenten faseroptischen Kommunikationsnetzes OKN werden beispielsweise an die Regenerationseinheit RE direkt die optischen Fasern OF geführt und die Regenerationseinrichtung RE wiederum über optische Verbindungsfasern ZV an die Überwachungseinrichtung UE angeschlossen. Beispielhaft sind in Figur 2 eine erste, zweite, dritte, vierte, fünfte, sechste, siebte, achte, neunte und zehnte von einer Vielzahl von optischen Fasern OF1-OF10 dargestellt, die an den ersten optischen Netzknoten ZE1 angeschlossen sind. Hierbei werden beispielsweise die neunte und die zehnte optische Faser OF9, OF10 über den ersten optischen Netzknoten ZE1 geführt, d.h. an die neunte und zehnte optische Faser OF9, OF10 wird im ersten optischen Netzknoten ZE1 keine dezentrale optische Einrichtung DZ angeschlossen. Die erste, dritte, fünfte und siebte optische Faser OF1, OF3, OF5, OF7 verbinden den vierten Netzknoten ZE4 mit dem ersten Netzknoten ZE1 und diese werden im ersten Netzknoten ZE1 beispielsweise direkt an die Überwachungseinrichtung UE geführt. Analog dazu ist der erste optische Netzknoten ZE1 über die zweite, vierte, sechste und achte optische Faser OF2, OF4, OF6, OF8 mit dem zweiten optischen Netzknoten verbunden, die wiederum im ersten optischen Netzknoten ZE1 beispielsweise direkt an die Überwachungseinrichtung UE geführt werden.

Desweiteren ist in Figur 2 die für die Übertragung der optischen Signale os in Richtung vom ersten zum vierten optischen Netzknoten ZE1, ZE4 vorgesehene, erste optische Übertragungsrichtung UER1 und die für die Übertragung der optischen Signale os in Richtung von der ersten zum zweiten optischen Netzknoten ZE1, ZE2 vorgesehene, zweite optische Übertragungsrichtung UER2 angedeutet, wobei die erste, vierte, fünfte, achte und neunte optische Faser OF1, OF4, OF5, OF9 in erster Übertragungsrichtung UER1 und die zweite, dritte, sechste, siebte und zehnte optische Faser OF2, OF3, OF6, OF7, OF10 in zweiter Übertragungsrichtung UER2 beispielsweise unidirektional betrieben werden.

Die erste dezentrale optische Einrichtung DZ1 ist durch die erste und die zweite optische Zuleitungsfaser ZF1, ZF2 mit dem ersten Netzknoten ZE1 verbunden, wobei über die erste optische Zuleitungsfaser ZF1 optische Signale os von der Sendeeinheit SE1 der ersten dezentralen optischen Einrichtung DZ1 zur Regenerationseinrichtung RE des ersten Netzknoten ZE1 und über die zweite optische Zuleitungsfaser ZF2 optische Signale os von der Regenerationseinrichtung RE des ersten optischen Netzknoten ZE1 an die erste Empfangseinheit EE1 der ersten dezentralen optischen Einrichtung DZ1 übertragen werden.

Im Gegensatz dazu ist die zweite dezentrale optische Einrichtung DZ2 über eine dritte, vierte, fünfte und sechste optische Zuleitungsfaser ZF3, ZF4, ZF5, ZF6 mit dem ersten optischen Netzknoten ZE1 bzw. mit der Überwachungseinrichtung UE des ersten optischen Netzknoten ZE1 verbunden, d.h. für den Anschluß der zweiten dezentralen optischen Einrichtung DZ2 an den ersten optischen Netzknoten ZE1 ist zusätzlich ein 1+1 Leitungsschutz vorgesehen. Hierzu werden über die dritte und vierte optische Zuleitungsfaser ZF3, ZF4 dieselben optischen Signale os annähernd gleichzeitig von der zweiten Sendeeinheit SE2 der zweiten dezentralen optischen Einrichtung DZ2 zur Überwachungseinrichtung UE des ersten optischen Netzknoten ZE1 und über die fünfte und sechste optische Zuleitungsfaser ZF5, ZF6 dieselben optischen Signale os annähernd gleichzeitig von der Überwachungseinrichtung UE des ersten optischen Netzknoten ZE1 zur Empfangseinheit EE2 der zweiten dezentralen optischen Einrichtung DZ2 übertragen, d.h. die vierte und fünfte optische Zuleitungsfaser ZF4, ZF5 werden in einem redundanten Betriebsmodus betrieben.

Ein über die dritte optische Faser OF3 in zweiter Übertragungsrichtung UER2 zum ersten optischen Netzknoten ZE1 übertragenes erstes optisches Signal os1 wird im ersten optischen Netzknoten ZE1 an die Überwachungseinrichtung UE geführt und dort bzgl. des über die vierte optische Faser OF4 in erster Übertragungsrichtung UER1 zum ersten optischen Netzknoten ZE1 redundant übertragenen ersten optischen Signal os1 überwacht, d.h. es wird anhand des erhaltenen ersten optischen Signals osl der Betriebszustand der dritten und der vierten optischen Faser OF3, OF4 überprüft. Anschließend wird das erste optische Signal os1 über die eine optische Zuleitungsfaser ZF an die Regenerationseinheit RE geführt. In der Regenerationseinheit RE wird der ursprüngliche optische Signalpegel des empfangenen ersten optischen Signals os1 regeneriert und anschließend über die zweite optische Zuleitungsfaser ZF2 zur ersten Empfangseinheit EE1 der ersten dezentralen optischen Einrichtung DZ1 übertragen. Das in der ersten Empfangseinheit EE1 der ersten, dezentralen optischen Einrichtung DZ1 empfangene erste optische Signal os1 wird anschließend in der ersten, dezentralen optischen Einrichtung DZ1 weiterverarbeitet.

Das von der ersten optischen Sendeeinheit SE1 beispielsweise erzeugte, zweite optische Signal os2 wird von der ersten dezentralen, optischen Einrichtung DZ1 über die erste optische Zuleitungsfaser ZF1 zur Regenerationseinheit RE des ersten optischen Netzknoten ZE1 übertragen. Nach Regeneration des zweiten optischen Signals os2 wird es über eine weitere optische Zuleitungsfaser ZF zur Überwachungseinrichtung UE übertragen. In der Überwachungseinrichtung UE wird das zweite optische Signal os2 für die Übertragung über die erste und die zweite optische Faser OF1, OF2 vorbereitet und zusätzlich erfindungsgemäß der Betriebszustand der ersten optischen Zuleitungsfaser ZF1 überwacht. Desweiteren wird die der ersten dezentralen optischen Einrichtung DZ1 zugeordnete Datenrate in der Überwachungseinrichtung UE überwacht. Das zweite optische Signal os2 wird aktiv über die erste optische Faser OF1 in erster Übertragungsrichtung UER1 und redundant über die zweite optische Faser OF2 in zweiter Übertragungsrichtung UER2 von der Überwachungseinrichtung UE des ersten optischen Netzknoten ZE1 zum vierten bzw. zweiten optischen Netzknoten ZE4, ZE2 übertragen.

Zusätzlich ist in Figur 2 eine weitere Ausgestaltung des transparenten faseroptischen Kommunikationsnetzes OKN durch die Ergänzung des Anschlusses der zweiten dezentralen Einrichtung DZ2 an den ersten optischen Netzknoten ZE1 mit einer 1+1 Leitungsschutzschaltung dargestellt. Ein über die siebte und achte optische Faser OF7, OF8 zum ersten optischen Netzknoten ZE1 annäherend gleichzeitig übertragenes, drittes optisches Signal os3 wird im ersten optischen Netzknoten ZE1 an die Überwachungseinrichtung UE geführt. In der Überwachungseinrichtung UE erfolgt eine Überprüfung des Betriebszustands der siebten und achten optischen Fasern OF7, OF8 und eine Kontrolle der für die Übertragung zur zweiten dezentralen Einrichtung DZ2 benutzten Datenrate. Im Gegensatz zum oben beschrieben Anschluß der ersten dezentralen Einrichtung DZ1 an den ersten optischen Netzknoten ZE1 wird in der Überwachungseinrichtung das über die siebte optische Faser OF7 übertragene dritte optische Signal os3 an die fünfte optische Zuleitungsfaser ZF5 geführt und über diese zur zweiten, dezentralen optischen Einrichtung DZ2 übertragen. Analog dazu wird das über die achte optische Faser OF8 übertragene dritte optische Signal os3 über die Überwachungseinrichtung UE an die sechste optische Zuleitungsfaser ZF6 geführt und über diese zur zweiten, dezentralen optischen Einrichtung DZ2 übertragen. In der zweiten, dezentralen optischen Einrichtung DZ2 werden sowohl das über die fünfte als auch das über die sechste optische Zuleitungsfaser übertragene dritte optische Signal os3 in der zweiten optischen Empfangseinheit EE2 empfangen und in der zweiten, dezentralen optischen Einrichtung DZ2 weiterverarbeitet.

Das von der zweiten Sendeeinrichtung SE2 beispielsweise in der zweiten, dezentralen optischen Einrichtung DZ2 erzeugte vierte optische Signal os4 wird sowohl über die dritte als auch über die vierte optische Zuleitungsfaser ZF3, ZF4 annähernd gleichzeitig an den ersten optischen Netzknoten ZE1 übertragen und im ersten optischen Netzknoten ZE1 an die Überwachungseinrichtung UE geführt. In der Überwachungseinrichtung UE wird der Betriebszustand der dritten und vierten optischen Zuleitungsfasern ZF3, ZF4 und die Datenrate der zwischen der zweiten dezentralen Einrichtung DZ2 und dem optischen Netzknoten ZE2 aktuell übertragenen Daten überwacht. Anschließend wird das über die dritte, optische Zuleitungsfaser ZF3 zur Überwachungseinrichtung UE übertragene, vierte optische Signal os4 über die fünfte, optische Faser OF5 von der Überwachungseinrichtung UE des ersten optischen Netzknotens ZE1 zum vierten optischen Netzknoten ZE4 in erster Übertragungsrichtung UER1 aktiv übertragen. Analog dazu wird das über die vierte, optische Zuleitungsfaser ZF4 zur Überwachungseinrichtung redundant übertragene, vierte optische Signal os4 über die sechste, optische Faser OF6 von der Überwachungseinrichtung des ersten optischen Netzknotens ZE1 zum zweiten, optischen Netzknoten ZE2 in zweiter Übertragungsrichtung UER2 redundant übertragen.

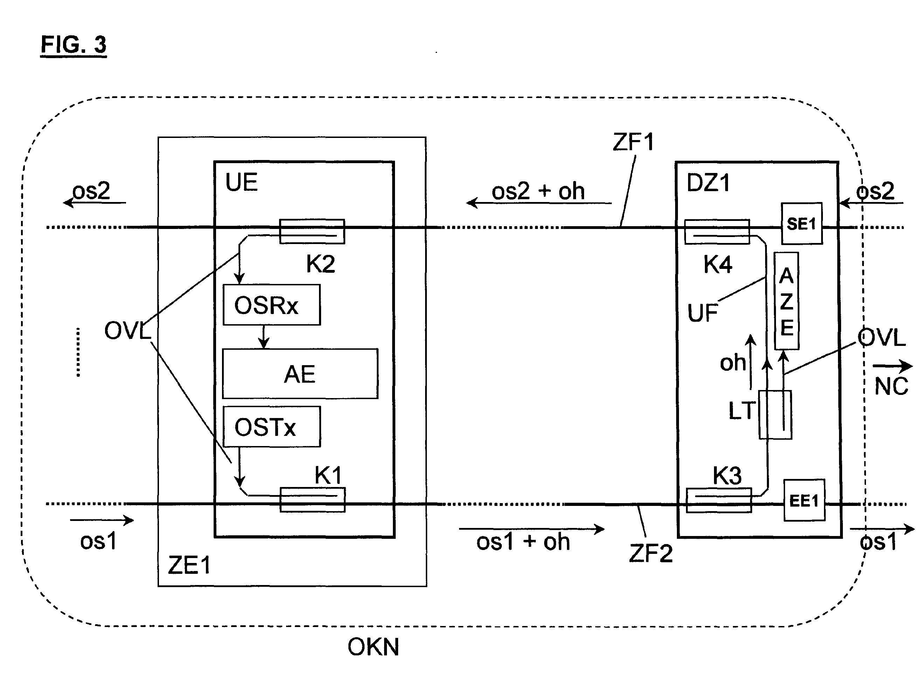

Figur 3 zeigt das in Figur 2 dargestellte transparente faseroptische Kommunikationsnetz OKN ausschnittsweise, wobei insbesondere die erste zentrale optische Einrichtung ZE1, beispielsweise ein optischer Netzknoten und die erste dezentrale optische Einrichtung DZ1, beispielsweise ein passives Netzabschlußgerät dargestellt sind. Hierbei soll die in Realität erheblich größere Entfernung zwischen dem ersten Netzknoten ZE1 und dem ersten passiven Netzabschlußgerät DZ1 in Figur 3 durch eine punktierte Linie angedeutet werden.

Des Weiteren ist im ersten Netzknoten ZE1 analog zu Figur 2 eine Überwachungseinrichtung UE angeordnet, die eine erste optische Sendeeinheit OSTx zur Erzeugung eines optischen Hilfssignals oh und eine erste optische Empfangseinheit OSRx zum Empfang des rückübertragenen, optischen Hilfssignals oh aufweist. Die optische Empfangseinheit OSRx ist mit einer Auswerteeinheit AE zur optischen Auswertung des empfangenen, optischen Hilfssignals oh verbunden, d.h. mit Hilfe der Auswerteeinheit AE kann das empfangene, optische Hilfssignal oh beispielsweise optisch angezeigt werden. Zusätzlich sind im ersten Netzknoten ZE1 bzw. in der Überwachungseinrichtung UE zur Einkopplung bzw. Auskopplung des optischen Hilfssignals oh ein erster und ein zweiter wellenlängenselektiver Koppler K1, K2 vorgesehen, wobei der erste wellenlängenselektive Koppler K1 mit der zweiten optischen Zuleitungsfaser ZF2 und über eine optische Verbindungsfaser OVL mit der ersten optischen Sendeeinheit OSTx und der zweite wellenlängenselektive Koppler K2 mit der ersten optischen Zuleitungsfaser ZF1 und über eine weitere optische Verbindungsfaser OVL mit der ersten optischen Empfangseinrichtung OSRx verbunden ist.

Das passive Netzabschlußgerät DZ1 weist ebenfalls einen dritten und einen vierten wellenlängenselektiven Koppler K3, K4 auf, die beispielsweise über eine optische Umlenkfaser UF verbunden sind. Der dritte wellenlängenselektive Koppler K3 ist an die zweite optische Zuleitungsfaser ZF2 und der vierte wellenlängenselektive Koppler K4 an die erste optische Zuleitungsfaser ZF1 angeschlossen. Desweiteren ist ein Leistungsteiler LT vorgesehen, der mit einer optischen Anzeigeeinheit AZE über eine optische Verbindungsfaser OVL verbunden ist und an den die optische Umlenkfaser UF geführt ist.

Ein vom transparenten faseroptischen Kommunikationsnetz OKN beispielsweise über dritte optische Faser OF3 an den ersten optischen Netzknoten ZE1 übertragenes erstes optisches Nutzsignal os1 wird im ersten optischen Netzknoten ZE1 über die zweite optische Zuleitungsfaser ZF2 zum ersten wellenlängenselektiven Koppler K1 geführt. Mit Hilfe des wellenlängenselektiven Kopplers K1 wird anschließend das optische Hilfssignal oh und das erste optische Nutzsignal os1 zu einem ersten optischen Übertragungssignal os1+oh zusammengekoppelt und über die zweite optische Zuleitungsfaser ZF2 zum ersten passiven Netzabschlußgerät DZ1 übertragen. Das im ersten passiven Netzabschlußgerät DZ1 über die zweite optische Zuleitungsfaser ZF2 empfangene erste optische Übertragungssignal os1+oh wird mit Hilfe des dritten wellenlängenselektiven Kopplers K3 entkoppelt und das zurückgewonnene optische Hilfssignal oh über die optische Umlenkfaser UF zum vierten wellenlängenselektiven Koppler K4 übertragen. Das erste optische Nutzsignal os1 hingegen wird weiter über die zweite optische Zuleitungsfaser ZF2 zum Netzkunden NC übertragen. Weiterhin kann von dem über die optische Umlenkfaser UF geführten, optischen Hilfssignal oh ein Teil der Signalleistung mit Hilfe des Leistungsteilers LT abgeteilt werden und anschließend dem Netzkunden NC über die optische Anzeigeeinheit AZE am passiven Netzabschlußgerät DZ1 angezeigt werden. Damit wird dem Netzkunden NC ermöglicht, den Betriebszustand der zweiten optischen Zuleitungsfaser ZF2 am passiven Netzabschlußgerät DZ1 optisch zu überwachen, d.h. wird durch die Anzeigeeinheit AZE der Empfang des optischen Hilfssignal oh angezeigt, so liegt kein Bruch oder keine Funktionsstörung der zweiten optischen Zuleitungsfaser ZF2 vor.

Das vom Netzkunden NC zum ersten Netzabschlußgerät DZ1 übertragene zweite optische Nutzsignal os2 wird im ersten Netzabschlußgerät DZ1 über die erste optische Zuleitungsfaser ZF1 an den vierten wellenlängenselektiven Koppler K4 geführt. Im vierten wellenlängenselektiven Koppler K4 werden das über die optische Umlenkfaser UF übertragene, umgelenkte optische Hilfssignal oh und das zweite optische Nutzsignal os2 zu einem gemeinsamen zweiten optischen Übertragungssignal os2+oh zusammengekoppelt und über die erste optische Zuleitungsfaser ZF1 vom ersten Netzabschlußgerät DZ1 zum ersten optischen Netzknoten ZE1 übertragen. Mit Hilfe des zweiten wellenlängenselektiven Kopplers K2 wird das optische Hilfssignal oh aus dem zweiten optischen Übertragungssignal os2+oh gefiltert und über eine optische Verbindungsfaser OVL an die erste optische Empfangseinheit OSRx geführt. Die durch die erste optische Empfangseinheit OSRx aus dem optischen Hilfssignal oh gewonnenen Informationen über den Betriebszustand der ersten und zweiten optischen Zuleitungsfaser ZF1,ZF2 werden der Auswertungseinheit AE angezeigt, d.h. beispielsweise der Empfang des optischen Hilfssignals oh in der optischen Empfangseinheit OSRx läßt einen ordnungsgemäßen Betriebszustand der ersten und zweiten optischen Zuleitungsfaser ZF1, ZF2 erkennen. Das nach der Filterung durch den zweiten wellenlängenselektiven Koppler K2 verbleibende zweite optische Nutzsignal os2 wird beispielsweise über die zweite optische Faser OF2 zu einem weiteren Netzknoten ZE des transparenten faseroptischen Kommunikationsnetzes OKN des Netzbetreibers übertragen.

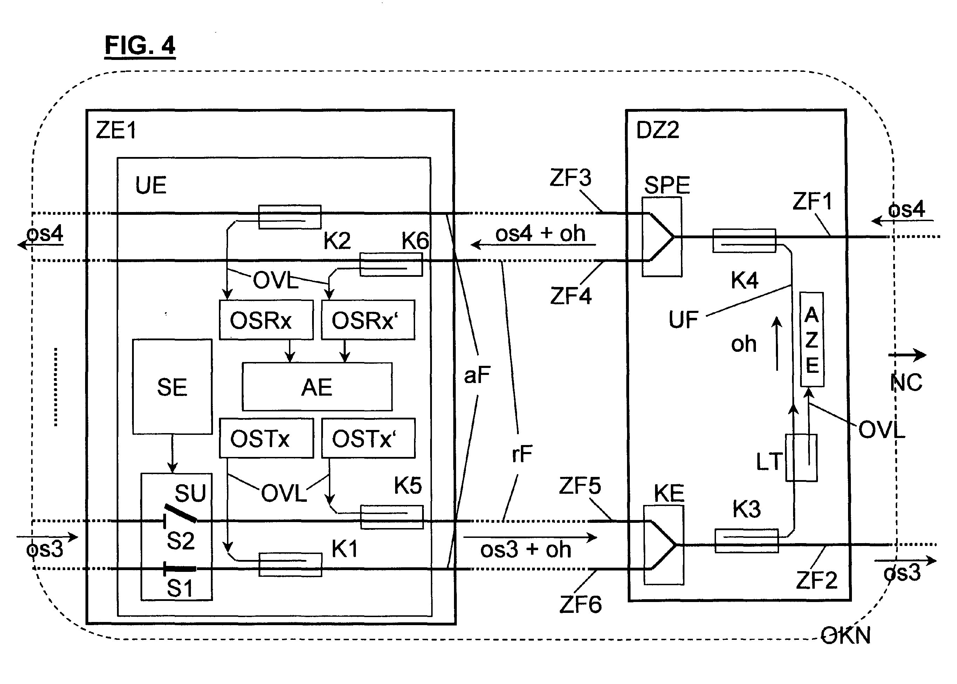

Figur 4 zeigt analog zu Figur 3 schematisch einen weiteren Ausschnitt des in Figur 2 dargestellten, transparenten faseroptischen Kommunikationsnetzes OKN, wobei zur Erhöhung der Zuverlässigkeit der zweiten dezentralen Einrichtung DZ2 an das transparente faseroptische Kommunikationsnetz OKN bzw. an den ersten optischen Netzknoten ZE1 eine 1+1 Leitungsschutzschaltung vorgesehen ist, d.h. es wird sowohl zusätzlich zur dritten optischen Zuleitungsfaser ZF3 die vierte optische Zuleitungsfaser ZF4 als auch zusätzlich zur fünften optischen Zuleitungsfaser ZF5 die sechste optische Zuleitungsfaser ZF6 für den Anschluß eines Netzkunden NC zur Übertragung eines dritten bzw. vierten optischen Übertragungssignals os3+oh,os4+oh bereitgestellt. Somit kann beim Ausfall bzw. beim Auftreten einer Funktionsstörung auf einer der aktiven optischen Fasern aF - d.h. auf der dritten oder sechsten optischen Zuleitungsfaser ZF3,ZF6 - die jeweilige zugehörige redundante optische Faser rF - d.h. die vierte oder fünfte optische Zuleitungsfaser ZF4,ZF5 - für die weitere Datenübertragung benutzt werden.

Hierzu sind im Vergleich zu der in Figur 3 beschriebenen Anordnung in der Überwachungseinrichtung UE des ersten Netzknotens ZE1 zusätzlich eine zweite optische Sendeeinrichtung OSTx' und eine zweite optische Empfangseinrichtung OSRx' vorgesehen, wobei die zweite optische Empfangseinrichtung OSRx' ebenfalls mit der Auswerteeinheit AE verbunden ist. Desweiteren ist der erste optische Netzknoten ZE1 für die Ein- bzw. Auskopplung des optischen Hilfssignals oh in die fünfte bzw. aus der vierten optischen Zuleitungsfaser ZF5,ZF4 mit einem fünften und einem sechsten wellenlängenselektiven Koppler K5, K6 ausgestattet, wobei die zweite optische Sendeeinheit OSTx' mit dem fünften wellenlängenselektiven Koppler K5 und die zweite optische Empfangseinheit OSRx' mit dem sechsten wellenlängenselektiven Koppler K6 jeweils über eine optische Verbindungsfaser OVL verbunden ist. In Figur 4 sind beispielhaft eine erste und eine zweite optische Sendeeinrichtung OSTx, OSTx' dargestellt, wobei auch als weitere Realisierungsform zur Erzeugung des optischen Hilfssignals oh und zur Verteilung des optischen Hilfssignals oh auf die aktive und die redundante optische Faser aF, rF die Verwendung der ersten optischen Sendeeinrichtung OSTx und eines zusätzlichen Leistungsteiler, mit dessen Hilfe das erzeugte, optische Hilfssignal oh auf die aktive und die redundante Faser aF,rF verteilt wird, eine weitere - nicht in Figur 4 dargestellte-Realisierungsform darstellt.

Für die Realisierung des 1+1 Leitungsschutzes sind in der Überwachungseinrichtung UE des ersten optischen Netzknotens ZE1 zusätzlich eine Steuereinheit SE und eine einen ersten und zweiten optischen Schalter S1,S2 aufweisende Schalteinheit SU vorgesehen, wobei die Steuerung der Schalteinheit SU mit Hilfe der Steuereinheit SE erfolgt. Der erste bzw. zweite optische Schalter S1,S2 sind für das Zuschalten bzw. Abschalten einer der redundanten bzw. der aktiven optischen Fasern aF, rF vorgesehen und werden über die Schalteinheit SU von der Steuereinheit SE gesteuert. Die Steuereinheit SU wird über eine Netzmanagementsystem - in Figur 4 nicht dargestellt - gesteuert.

Desweiteren erfolgt eine Zusammenführung des über die fünfte und/oder die sechste optische Zuleitungsfaser ZF5, ZF6 übertragenen ersten optischen Übertragungssignals os3+oh mit einer zusätzlich im ersten passiven Netzabschlußgerät DZ1 vorgesehenen Kombinationseinheit KE, die mit dem dritten wellenlängenselektiven Koppler K3 über die zweite optische Zuleitungsfaser ZF2 verbunden ist. Zusätzlich ist im ersten Netzabschlußgerät DZ1 eine optische Splittereinheit SPE vorgesehen, mit deren Hilfe das über die erste optische Zuleitungsfaser ZF1 vom Netzkunden NC zum ersten Netzabschlußgerät DZ1 übertragene, zweite optische Nutzsignal os2 und das mit Hilfe des vierten wellenlängenselektiven Kopplers K4 mit dem zweiten optischen Nutzsignal os2 verkoppelte, umgelenkte Hilfssignal oh auf die dritte und vierte optische Zuleitungsfaser ZF3, ZF4 beispielsweise annähernd gleichmäßig verteilt werden. Somit wird das vierte optische Übertragungssignal os4+oh über die dritte und vierte optische Zuleitungsfaser ZF3, ZF4 beispielsweise annähernd gleichzeitig übertragen, d.h. trotz einer beispielsweise durch einen Leitungsbruch verursachten Funktionsstörung der dritten optischen Zuleitungsfaser ZF3 wird im ersten optischen Netzknoten ZE1 das über die vierte optische Zuleitungsfaser ZF4 - die redundante optische Fasern rF - übertragene vierte optische Übertragungssignal os4+oh empfangen.

Das vom transparenten faseroptischen Kommunikationsnetz OKN zum Netzkunden NC übertragene dritte optische Nutzsignal os3 wird bereits redundant über eine aktive und eine redundante optische Faser aF, rF zum ersten optischen Netzknoten ZE1 übertragen. Im ersten optischen Netzknoten ZE1 wird beispielsweise durch den in der Schalteinheit SU vorgesehenen zweiten optischen Schalter S2 die Einkopplung des dritten optischen Nutzsignals os3 in die fünfte optische Zuleitungsfaser ZF5 - eine der redundanten Fasern rF - unterbrochen, d.h. vom ersten optischen Netzknoten ZE1 zum ersten passiven Netzabschlußgerät DZ1 wird das dritte optische Nutzsignal os3 ausschließlich über die sechste optische Zuleitungsfaser ZF6 übertragen. Tritt nun beim Betrieb der sechsten optischen Zuleitungsfaser ZF6 eine Funktionsstörung auf, so wird der in Figur 4 offenstehende zweite optische Schalter S2 geschlossen und der erste optische Schalter S1 geöffnet, d.h. die Übertragung des dritten optischen Nutzsignals os3 vom ersten optischen Netzknoten ZE1 zum ersten passiven Netzabschlußgerät DZ1 erfolgt im weiteren über die fünfte optische Zuleitungsfaser ZF5. Alternativ können auch mit Hilfe der Schalteinheit SU sowohl die fünfte als auch die sechste optische Zuleitungsfaser ZF5, ZF6 für die Datenübertragung beispielsweise gleichzeitig benutzt werden und somit kann beim Auftreten einer Funktionsstörung die jeweilige gestörte optische Zuleitungsfaser ZF5,ZF6 abgeschaltet werden. Des Weiteren wird analog zu dem in Figur 3 dargestellten Ausführungsbeispiel im ersten optischen Netzknoten ZE1 das durch die erste bzw. zweite optische Sendeeinrichtung OSTx,OSTx' erzeugte optische Hilfssignal oh mit dem dritten optischen Nutzsignal os3 mit Hilfe des ersten bzw. des fünften wellenlängenselektiven Koppler K1,K5 zu einem dritten optischen Übertragungssignal os3+oh zusammengekoppelt und über die fünfte bzw. sechste optische Zuleitungsfaser ZF5, Zf6 zum ersten passiven Netzabschlußgerät DZ1 übertragen.

Das im ersten Netzabschlußgerät DZ1 empfangene dritte optische Übertragungssignal os3+oh wird mit Hilfe der Kombinationseinheit KE auf die im weiteren nur noch bestehende zweite optische Zuleitungsfaser ZF2 geführt, wobei in Analogie zur dritten Figurenbeschreibung das optische Hilfssignal oh mit Hilfe des dritten wellenlängenselektiven Kopplers K3 vom dritten optischen Übertragungssignal os3+oh separiert und über die optische Umlenkfaser UF an den vierten wellenlängenselektiven Koppler K4 geführt wird. Ein Teil des umgelenkten, optischen Hilfssignals oh wird mit Hilfe des Leistungsteilers LT abgeteilt und mit Hilfe der Anzeigeeinheit AZE dem Netzkunden NC am ersten Netzabschlußgerät DZ1 angezeigt, d.h. dem Netzkunden NC wird der Empfang des optischen Hilfssignals oh optisch visualisiert. Des Weiteren wird das umgelenkte, optische Hilfssignal oh und das vom Netzkunden NC zum ersten Netzabschlußgerät DZ1 über die erste optische Zuleitungsfaser ZF1 übertragene vierte optische Nutzsignal os4 durch den vierten optischen wellenlängenselektiven Koppler K4 zu einem zweiten optischen Signal os4+oh zusammengekoppelt, das wiederum über die erste optische Zuleitungsfaser ZF1 zur optischen Splittereinheit SPE geführt wird. Dort wird das vierte optische Übertragungssignal os4+oh beispielsweise annähernd gleichmäßig auf die dritte und die vierte optische Zuleitungsfaser ZF3, ZF4 verteilt und anschließend zum ersten optischen Netzknoten ZE1 übertragen.

Im ersten optischen Netzknoten ZE1 wird sowohl aus dem über die aktive als auch aus dem über die redundante Faser aF, rF übertragenen vierten optischen Übertragungssignal os4+oh das zurückgeführte optische Hilfssignal oh mit Hilfe des zweiten bzw. sechsten wellenlängenselektiven Kopplers K2,K6 ausgefiltert und anschließend über die jeweilige optische Verbindungsleitung OVL an die erste bzw. zweite optische Empfangseinheit OSRx,OSRx' übertragen. Die durch die erste und die zweite optische Empfangseinheit OSRx, OSRx' aus dem optischen Hilfssignalen oh gewonnenen Informationen über den Betriebszustand der dritten, vierten, fünften und sechsten optischen Zuleitungsfasern ZF3 bis ZF6 werden der Auswertungseinheit AE angezeigt, d.h. der ordnungsgemäße Betriebszustand der dritten, vierten, fünften und sechsten optischen Zuleitungsfasern ZF3 bis ZF6 wird beispielsweise durch den jeweiligen Empfang des optischen Hilfssignals in der ersten und zweiten optischen Empfangseinheit OSRx, OSRx' bestätigt. Das nach den Filterungen verbleibende, vierte optische Nutzsignal os4 wird über die fünfte und die sechste optische Faser OF5,OF6 redundant vom ersten Netzknoten ZE1 zu weiteren Netzknoten ZE des transparenten faseroptischen Kommunikationsnetzes OKN übertragen.

Im Gegensatz zu der Umlenkung des optischen Hilfsignals oh in der ersten bzw. zweiten dezentralen Einrichtung bzw. dem ersten bzw. zweiten passiven Netzabschlußgeräte DZ1,DZ2 mit Hilfe einer optischen Umlenkfaser UF - wie beispielhaft in Figur 3 als auch in Figur 4 dargestellt - können für die in Figur 3 und Figur 4 dargestellte Realisierung des erfindungsgemäßen Verfahrens mit 1+1 Leitungsschutz auch zwei getrennte optische Umlenkfasern UF sowohl für die aktive als auch für die redundante optische Faser aF, rF im Netzabschlußgerät DOE vorgesehen sein.

Zur Überwachung beispielsweise des vollständigen Verbindungsweges zwischen zwei dezentralen Einrichtungen DZ1,DZ2, die an denselben Netzknoten bzw. dieselbe zentrale Einrichtung ZE1 des transparenten faseroptischen Kommunikationsnetzes OKN angeschlossen sind, wird das optische Hilfssignal oh - wie in den vorhergehenden Ausführungsbeispielen beschrieben - an die erste dezentrale Einrichtung DZ1 übertragen, dort erfindungsgemäß umgelenkt und zum ersten Netzknoten ZE1 rückübertragen. Des Weiteren wird das optische Hilfssignal oh - anstelle der Auswertung im ersten Netzknoten ZE1 - an die weiteren, den ersten Netzknoten ZE1 mit der zweiten dezentralen Einrichtung DZ2 verbindenden optischen Zuleitungsfasern ZF geführt und zur zweiten dezentralen Einrichtung DZ2 übertragen, dort erfindungsgemäß umgelenkt sowie zum ersten Netzknoten ZE1 rückübertragen. Das somit über den vollständigen Verbindungsweg für eine geschaltetete optische Verbindung zwischen den an die erste und die zweite dezentrale Einrichtung DZ1,DZ2 angeschlossenen Netzkunden NC geführte optische Hilfssignal oh wird wie zuvor beschrieben im ersten Netzknoten ZE1 zur Überwachung des Betriebszustandes der den vollständigen Verbindungsweg bildenden optischen Zuleitungsfasern ZF optisch ausgewertet.

Des Weiteren ist die Überwachungseinrichtung UE jeweils über eine festgelegte Schnittstelle an ein Netzmanagementsystem-in den Figuren 1 bis 4 nicht dargestellt - anschließbar, mit dessen Hilfe das transparente faseroptische Kommunikationsnetz OKN von dem Netzbetreiber fernüberwacht werden kann.

## Patentansprüche

1. Verfahren zur Überwachung des Betriebes von optischen Zuleitungsfasern (ZF1,ZF2) innerhalb eines transparenten faseroptischen Kommunikationsnetzes (OKN), insbesondere nach Patent DE 199 10 646.0, wobei für die Übertragung von optischen Nutzsignalen (os1,os2) zwischen einer zentralen und einer dezentralen, optischen Einrichtung (ZE1,DZ1) zumindest zwei optische Zuleitungsfasern (ZF1,ZF2) vorgesehen sind,
**dadurch gekennzeichnet**,
- daß ein in der zentralen Einrichtung (ZE1) erzeugtes optisches Hilfssignal (oh) zusammen mit einem ersten optischen Nutzsignal (os1) über mindestens eine der optischen Zuleitungsfasern (ZF2) von der zentralen zur dezentralen optischen Einrichtung (ZE1,DZ1) übertragen wird,
- daß das in der dezentralen, optischen Einrichtung (DZ1) empfangene, optische Hilfssignal (oh) umgelenkt und über mindestens eine weitere der optischen Zuleitungsfasern (ZF1) zur zentralen, optischen Einrichtung (ZE1) zusätzlich zu einem zweiten optischen Nutzsignal (os2) rückübertragen wird und
- daß der Empfang des rückübertragenen optischen Hilfssignals (oh) in der zentralen, optischen Einrichtung (ZE1) zur Überwachung des Betriebszustandes von zumindest einer der beiden optischen Zuleitungsfasern (ZF1,ZF2) optisch ausgewertet wird.

2. Verfahren nach Anspruch 1,
**dadurch gekennzeichnet,**
**daß** zusätzlich zu dem optischen Hilfssignal (oh) das zweite optische Nutzsignal (os2) zur Überwachung des Betriebszustands der beiden optischen Fasern (ZF1,ZF2) in der zentralen, optischen Einrichtung (ZE1) ausgewertet wird.

3. Verfahren nach einem der Ansprüche 1 und 2,
**dadurch gekennzeichnet,**
**daß** zumindest ein Teil des in der dezentralen, optischen Einrichtung (DZ1) empfangenen Hilfssignals (oh) abgeteilt wird und die im abgeteilten Hilfssignal (oh) sowie die im zweiten optischen Nutzsignal (os2) enthaltene Faserzustandsinformationen über den Betriebszustands der beiden optischen Zuleitungsfasern (ZF1,ZF2) in der dezentralen, optischen Einrichtung (DZ1) angezeigt werden.

4. Verfahren nach einem der Ansprüche 1 bis 3,
**dadurch gekennzeichnet,**
**daß** die Frequenz des optischen Hilfssignals (oh) im optisch sichtbaren Frequenzbereich liegt.

5. Verfahren nach einem der Ansprüche 1 bis 4,
**dadurch gekennzeichnet,**
**daß** das in der zentralen, optischen Einrichtung (ZE1) erzeugte, optische Hilfssignal (oh) eine Lichtleistungsintensität kleiner zwei Milliwatt aufweist.

6. Verfahren nach einem der Ansprüche 1 bis 5,
**dadurch gekennzeichnet,**
**daß** in der dezentralen, optischen Einrichtung (DZ1) aus dem empfangenen, optischen Signal (os1+oh) mit Hilfe eines ersten wellenlängenselektiven Faserkopplers (K3) das Hilfssignal (oh) ausgekoppelt, anschließend umgelenkt und mit Hilfe eines zweiten Faserkopplers (K4) mit dem zur zentralen optischen Einrichtung (ZE1) zu übertragenden zweiten Nutzsignal (os2) zu einem weiteren optischen Signal (os2+oh) zusammengefaßt und zur zentralen optischen Einrichtung (ZE1) übertragen wird.

7. Verfahren nach einem der Ansprüche 1 bis 6,
**dadurch gekennzeichnet,**
**daß** die zentrale, optische Einrichtung (ZE1) als Netzknoten und die dezentrale, optische Einrichtung (DZ1) als passives Netzabschlußgerät eines transparenten faseroptischen Kommunikationsnetzes (OKN) realisiert ist.

8. Verfahren nach einem der Ansprüche 1 bis 7,
**dadurch gekennzeichnet,**
**daß** beim Betrieb zumindest zweier aktiver und zumindest zweier redundanter, optischer Zuleitungsfasern (ZF3 bis ZF6) zumindest ein in der zentralen, optischen Einrichtung (ZE1) erzeugtes, optisches Hilfssignal (oh) von der zentralen zur dezentralen, optischen Einrichtung (ZOE,DOE) über zumindest eine der aktiven und/oder zumindest eine der redundanten, optischen Zuleitungsfasern (ZF5,ZF6) übertragen wird,
**daß** das in der dezentralen, optischen Einrichtung (DZ1) empfangene zumindest eine optische Hilfssignal (oh) umgelenkt wird und
**daß** das umgelenkte zumindest eine optische Hilfssignal (oh) über die zugehörige zumindest eine weitere der aktiven und/oder zumindest eine weitere der redundanten, optischen Zuleitungsfasern (ZF3,ZF4) zur zentralen, optischen Einrichtung (ZE1) rückübertragen wird.

9. Verfahren nach Anspruch 8,
**dadurch gekennzeichnet,**
**daß** beim Betrieb von zumindest zwei aktiven und zumindest zwei redundanten, optischen Zuleitungsfasern (ZF3 bis ZF6) in der zentralen optischen Einrichtung (ZE1) zumindest ein optischer Schalter (S1,S2) vorgesehen ist, mit dessen Hilfe eine der optischen Fasern (ZF5,ZF6) inaktiv geschaltet wird, und
**daß** in der dezentralen Einrichtung (DZ1) zumindest ein optischer Koppler (KE) und zumindest ein optischer Leistungsteiler (SPE) vorgesehen sind, wobei durch den optischen Koppler (KE) das jeweils über die zumindest eine der aktiven und die zumindest eine der redundanten, optischen Zuleitungsfasern (ZF5,ZF6) von der zentralen zur dezentralen Einrichtung (ZE1,DZ1) übertragene optische Nutzsignal (os3) und das optische Hilfssignal (oh) zu einem optischen Signal (os3+oh) zusammengefaßt werden und durch den optischen Leistungsteiler (SPE) ein über die weitere optische Faser (FN) übertragenes, zweites optisches Nutzsignal (os4) auf zumindest eine weitere der aktiven und zumindest eine weitere der redundanten, optischen Zuleitungsfasern (ZF3,ZF4) aufgeteilt und zur zentralen Einrichtung (ZE1) übertragen wird.

10. Verfahren nach einem der Ansprüche 1 bis 9,
**dadurch gekennzeichnet,**
**daß** für die in der dezentralen, optischen Einrichtung (DZ1) durchgeführte Umlenkung des optischen Hilfssignals (oh) zumindest eine in der dezentralen, optischen Einrichtung (DZ1) zusätzlich angeordnete optische Umlenkfaser (UF) vorgesehen ist.

11. Verfahren nach Anspruch 1,
**dadurch gekennzeichnet,**
**daß** zur Überwachung des Betriebszustands mindestens zweier optischer, eine erste und zweite dezentrale, optische Einrichtung (DZ1,DZ2) über eine zentrale optische Einrichtung (ZE1) verbindende Zuleitungsfasern (ZF1,ZF2) das von der ersten dezentralen, optischen Einrichtung (DZ1) rückübertragene optische Hilfssignal (oh) über die zentrale, optische Einrichtung (ZE1) zusammen mit dem zweiten optischen Nutzsignal (os1) über mindestens eine der optischen Zuleitungsfasern (ZF2) von der zentralen zur zweiten dezentralen optischen Einrichtung (ZE1,DZ2) übertragen wird,
**daß** das in der zweiten dezentralen, optischen Einrichtung (DZ2) empfangene, optische Hilfssignal (oh) erneut umgelenkt und über mindestens eine weitere der optischen Zuleitungsfasern (ZF1) zur zentralen, optischen Einrichtung (ZE1) zusätzlich zu dem ersten optischen Nutzsignal (os1) rückübertragen wird und
**daß** der Empfang des rückübertragenen optischen Hilfssignals (oh) in der zentralen, optischen Einrichtung (ZE1) zur Überwachung des Betriebszustandes von der beiden optischen Zuleitungsfasern (ZF1,ZF2) optisch ausgewertet wird.
